# EUROPEAN PATENT APPLICATION

(11) **EP 4 779 664 A1**
(43) Date of publication of application: **22.07.2026**
(21) Application number: 25174205.2
(22) Date of filing: 05.05.2025
(51) Int. Cl.: H01G 4/30, H01G 4/12

(54) **DIELECTRIC GRAIN PARTICLES FOR MULTILAYER CERAMIC COMPONENTS BASED ON CORE PARTICLES, CORE-SHELL PARTICLES AND DUAL CORE-SHELL PARTICLES**

(30) Priority: 16.01.2025 KR 20250006587
(71) Applicant: Samsung Electro-Mechanics Co., Ltd., Gyeonggi-do (KR)
(72) Inventor: Kim, Yong In, Suwon-si, Gyeonggi-do (KR); Lee, Joo Hee, Suwon-si, Gyeonggi-do (KR); Choi, Min Young, Suwon-si, Gyeonggi-do (KR); Kim, Sang II, Suwon-si, Gyeonggi-do (KR); Jung, Han Seong, Suwon-si, Gyeonggi-do (KR); Kwon, Hyung Soon, Suwon-si, Gyeonggi-do (KR); Yoon, Seok Hyun, Suwon-si, Gyeonggi-do (KR)
(74) Representative: Grünecker Patent- und Rechtsanwälte PartG mbB

(57) **Abstract**

A multilayer electronic component (100), comprising:

a body (110) including a dielectric layer (111) and internal electrodes (121, 122); and

external electrodes (131, 132) disposed on an outer surface of the body (110),

wherein the dielectric layer (111) includes a plurality of dielectric grains (10, 20, 30),

wherein at least one of the plurality of dielectric grains (10, 20, 30) has a core-double shell structure including a core (11, 21) a first shell (12) surrounding at least a portion of the core, and a second shell (13) surrounding at least a portion of the first shell (12),

wherein the first and second shells (12, 13) include rare earth elements, and an average atomic percentage of the rare earth elements in the first shell (12) is higher than an average atomic percentage of the rare earth elements in the second shell (13), and

wherein the average atomic percentage of the rare earth elements in the first shell (12) is 4.0 at% or more and 6.0 at% or less.

Further, the average atomic percentage of the rare earth elements in the second shell (13) is 2.0 at% or more and less than 4.0 at%.

## Description

### CROSS-REFERENCE TO RELATED APPLICATION(S)

This application claims benefit of priority to Korean Patent Application No. 10-2025-0006587 filed on January 16, 2025 in the Korean Intellectual Property Office, the disclosure of which is incorporated herein by reference in its entirety.

### BACKGROUND

### 1. FIELD

The present disclosure relates to a multilayer electronic component.

### 2. DESCRIPTION OF RELATED ART

A multilayer ceramic capacitor (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom.

Such a multilayer ceramic capacitor may be used as a component of various electronic devices, since a multilayer ceramic capacitor may have a small size and high capacitance and may be easily mounted. As various electronic devices such as a computer and a mobile device have been designed to have a smaller size and higher output, demand for miniaturization and increased capacitance of a multilayer ceramic capacitor has increased.

As the automotive electronics industry has developed, automotive MLCC may need to operate smoothly even under extreme conditions of high voltage and may require high reliability. MLCC reliability may refer to the phenomenon in which characteristics of a capacitor may remain unchanged when a specific voltage is applied. MLCC reliability may be affected by various causes, and the change may be particularly evident depending on a dielectric composition. The current MLCC dielectric layer may include a main component of a barium titanate (BaTiO₃) base material, a fixed valence acceptor element, a rare earth element acting as a donor, and a variable valence acceptor element, and may be based on a material having additional sintering agent added.

### SUMMARY

An embodiment of the present disclosure is to provide a multilayer electronic component satisfying target TCC properties.

An embodiment of the present disclosure is to provide a multilayer electronic component having excellent reliability even when a high voltage is applied.

An embodiment of the present disclosure is to provide a multilayer electronic component having improved reliability.

According to an embodiment of the present disclosure, a multilayer electronic component includes a body including a dielectric layer and internal electrodes; and external electrodes disposed on the body, wherein the dielectric layer includes a plurality of dielectric grains, wherein at least one of the plurality of dielectric grains has a core-double shell structure including a core, a first shell surrounding at least a portion of the core, and a second shell surrounding at least a portion of the first shell, wherein the first and second shells include rare earth elements, and an average atomic percentage of rare earth elements in the first shell is higher than an average atomic percentage of rare earth elements in the second shell, and wherein an average atomic percentage of rare earth elements in the first shell is 4.0 at% or more and 6.0 at% or less.

### BRIEF DESCRIPTION OF DRAWINGS

The other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to an embodiment of the present disclosure;
FIG. 3 is a cross-sectional diagram taken along line I-I' in FIG. 1;
FIG. 4 is a cross-sectional diagram taken along line II-II' in FIG. 1;
FIG. 5 is an enlarged diagram illustrating region P FIG. 3;
FIGS. 6A and 6B are diagrams illustrating a core-double shell dielectric grain according to an embodiment of the present disclosure;
FIG. 7 is an image of mapping gadolinium (Gd) element through EDS mode of scanning transmission electron microscope (STEM) for core-double shell dielectric grain according to an embodiment of the present disclosure; and
FIG. 8 is an atomic percentage graph of gadolinium (Gd) measured by performing a line profile taken along LP-LP' in FIG. 7.

### DETAILED DESCRIPTION

Hereinafter, embodiments of the present disclosure will be described as below with reference to the accompanying drawings.

These embodiments are described in sufficient detail to enable those skilled in the art to practice the disclosure. It is to be understood that the various embodiments of the disclosure, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily render the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a lamination direction or a thickness (T) direction, the second direction may be defined as a length (L) direction, and the third direction may be defined as a width (W) direction.

### Multilayer Electronic Component

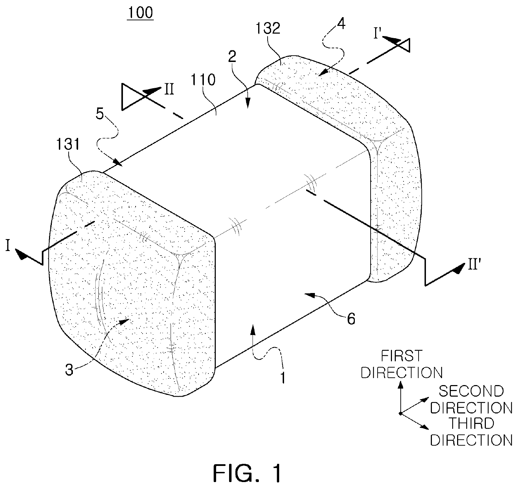

FIG. 1 is a perspective diagram illustrating a multilayer electronic component according to an embodiment.

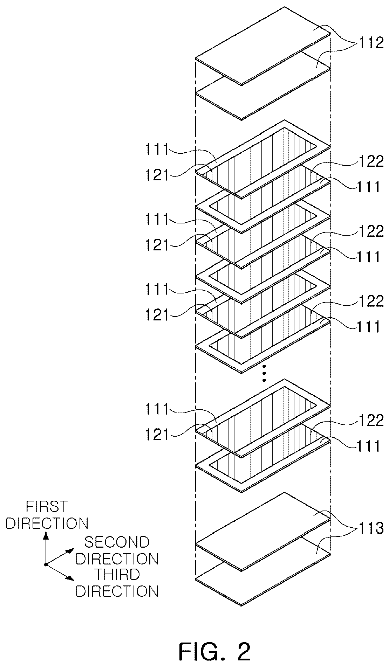

FIG. 2 is an exploded perspective diagram illustrating a lamination structure of an internal electrode according to an embodiment.

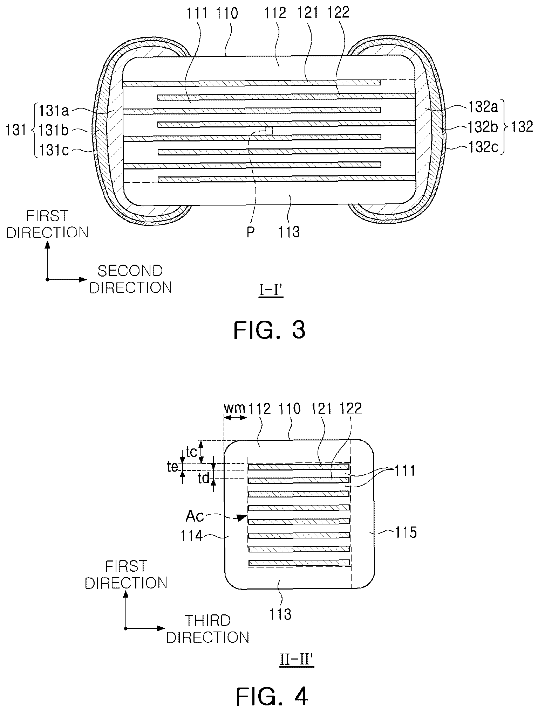

FIG. 3 is a cross-sectional diagram taken along line I-I' in FIG. 1.

FIG. 4 is a cross-sectional diagram taken along line II-II' in FIG. 1.

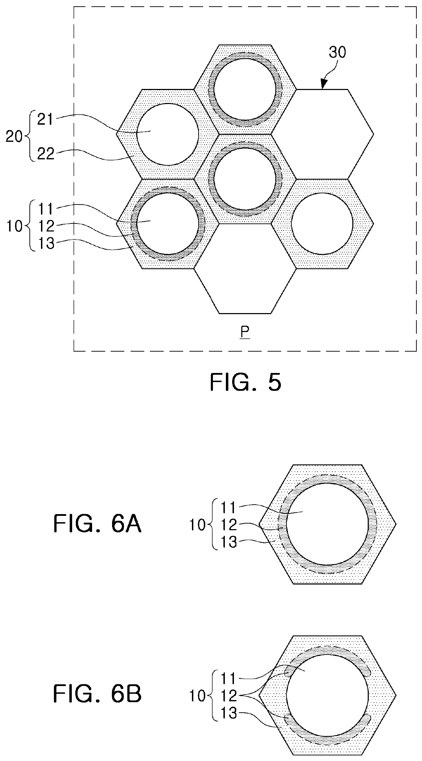

FIG. 5 is an enlarged diagram illustrating region P FIG. 3.

FIGS. 6A and 6B are diagrams illustrating a core-double shell dielectric grain according to an embodiment.

Hereinafter, a multilayer electronic component according to an embodiment will be described in greater detail with reference to FIGS. 1 to 6B. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to an embodiment may include a body 110 including a dielectric layer 111 and internal electrodes 121 and 122; and external electrodes 131 and 132 disposed on the body 110, wherein the dielectric layer 111 may include a plurality of dielectric grains 10, 20, and 30, wherein at least one of the plurality of dielectric grains 10, 20, and 30 may have a core-double shell structure 10 including a core 11, a first shell 12 surrounding at least a portion of the core 11, and a second shell 12 surrounding at least a portion of the first shell 12, wherein the first and second shells 12 and 13 may include rare earth elements, and an average atomic percentage of rare earth elements in the first shell 12 is higher than an average atomic percentage of rare earth elements in the second shell 13, and wherein an average atomic percentage of rare earth elements in the first shell 12 is 4.0 at% or more and 6.0 at% or less.

In the body 110, the dielectric layers 111 and the internal electrodes 121 and 122 may be alternately laminated.

More specifically, the body 110 may include a capacitance forming portion Ac disposed in the body 110 and forming capacitance including the first internal electrode 121 and the second internal electrode 122 alternately disposed to face each other with the dielectric layer 111 interposed therebetween.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exactly hexahedral shape formed by linear lines but may have a substantially hexahedral shape.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first to fourth surfaces 1, 2, 3, and 4 and opposing each other in the third direction.

The plurality of dielectric layers 111 forming the body 110 may be in a fired state, and boundaries between the adjacent dielectric layers 111 may be integrated with each other such that the boundaries may not be distinct without using a scanning electron microscope (SEM).

The raw material forming the dielectric layer 111 is not limited as long as sufficient capacitance may be obtained therewith, and generally, a perovskite (ABO₃) material may be used, and for example, a barium titanate material, a lead composite perovskite material, or a strontium titanate material may be used. A barium titanate material may include BaTiO₃ ceramic particles, and an example of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Z_{y})O₃ (0<y<1) in which Ca (calcium) and Zr (zirconium) are partially dissolved.

Also, as a raw material for forming the dielectric layer 111, various ceramic additives, organic solvents, binders, and dispersants may be added to particles such as barium titanate (BaTiO₃) depending on the purpose of the embodiment. For example, the additive may include rare earth elements and tin (Sn), and rare earth elements may include at least one of dysprosium (Dy) and terbium (Tb), but an embodiment thereof is not limited thereto.

Accordingly, the plurality of dielectric grains 10, 20, and 30 including the dielectric grain 10 having a core-double shell structure, the dielectric grain 20 having a core-shell structure, and the dielectric grain 30 not having a core-shell structure may include at least one of barium (Ba), titanium (Ti), or the like, included in the barium titanate-based material as a main component raw material, and rare earth elements, zirconium (Zr), magnesium (Mg), manganese (Mn), and silicon (Si) as additive raw materials.

Since the dielectric layer 111 may be formed using a dielectric material such as barium titanate (BaTiO₃), the dielectric layer 111 may include a dielectric microstructure after firing. The dielectric microstructure may include a plurality of dielectric grains, a dielectric grain boundary disposed between adjacent dielectric grains, and a triple point disposed at a point at which three or more dielectric grain boundaries are in contact with each other, and a plurality of the points may be included.

Here, at least one of the plurality of dielectric grains may have a core-double shell structure 10 including a core 11, a first shell 12 surrounding at least a portion of the core 11, and a second shell 13 surrounding at least a portion of the first shell 12, and at least one of the plurality of dielectric grains may have a core-shell structure 20 including a core 21, and a shell 22 surrounding at least a portion of the core 21. In other words, the plurality of dielectric grains 10, 20, and 30 may include a dielectric grain 10 having a core-double shell structure, a dielectric grain 20 having a core-shell structure, and a dielectric grain 30 not having a core-shell structure, which will be described in greater detail later.

Here, a thickness td of the dielectric layer may not be limited to any particular example.

In order to assure reliability of the multilayer electronic component 100 under a high-voltage environment, the thickness of the dielectric layer 111 may be 10.0 µm or less. Also, in order to implement miniaturization and high capacitance of the multilayer electronic component 100, the thickness of the dielectric layer 111 may be 3.0 µm or less, and in order to more easily implement ultra-miniaturization and high capacitance, the thickness of the dielectric layer 111 may be 1.0 µm or less, preferably 0.6 µm or less, and more preferably 0.4 µm or less.

Here, the thickness td of the dielectric layer 111 may indicate the thickness td of the dielectric layer 111 disposed between the first and second internal electrodes 121 and 122.

The thickness td of the dielectric layer 111 may indicate the size in the first direction of the dielectric layer 111. Also, the thickness td of the dielectric layer 111 may indicate the average thickness td of the dielectric layer 111 and may indicate the average size in the first direction of the dielectric layer 111.

The average size, in the first direction, of the dielectric layer 111 may be measured by scanning a cross-section in the first and second directions of the body 110 using a scanning electron microscope (SEM) with a magnification of 10,000X. More specifically, the average size, in the first direction, of the dielectric layer 111 may indicate the average value calculated by measuring the sizes, in the first direction, of the dielectric layer 111 at 10 points at an equal distance in the second direction in the scanned image. The 10 points at an equal distance may be specified in the capacitance formation portion Ac. Also, by extending the measurement of the average value to 10 dielectric layers 111, the average size, in the first direction, of the dielectric layer 111 may be further generalized.

The internal electrodes 121 and 122 may be laminated alternately with the dielectric layer 111.

The internal electrodes 121 and 122 may include a first internal electrode 121 and a second internal electrode 122, the first and second internal electrodes 121 and 122 may be alternately disposed to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body 110 and may be connected to the first internal electrode 121, and the second external electrode 132 may be disposed on the fourth surface 4 of the body 110 and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. In this case, the first and second internal electrodes 121 and 122 may be electrically separated from each other by the dielectric layer 111 disposed therebetween.

The body 110 may be formed by alternately laminating ceramic green sheets on which the first internal electrodes 121 are printed and ceramic green sheets on which the second internal electrodes 122 are printed, and firing the sheets.

The material for forming the internal electrodes 121 and 122 is not limited to any particular example, and a material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

Also, the internal electrodes 121 and 122 may be formed by printing conductive paste for internal electrodes including one or more of nickel (Ni), copper (Cu), palladium (Pd), silver (Ag), gold (Au), platinum (Pt), tin (Sn), tungsten (W), titanium (Ti), and alloys thereof on a ceramic green sheet. A screen printing method or a gravure printing method may be used as a method of printing the conductive paste for internal electrodes, but an embodiment thereof is not limited thereto.

The thickness te of the internal electrodes 121 and 122 may not be limited to any particular example.

In order to assure reliability under a high-voltage environment of the multilayer electronic component 100, the thickness te of the internal electrode may be 3.0 µm or less. Also, in order to implement miniaturization and high capacitance of the multilayer electronic component 100, the thickness te of the internal electrode may be 1.0 µm or less. In order to more easily implement ultra-miniaturization and high capacitance, the thickness te of the internal electrode may be 0.6 µm or less, and more preferably, 0.4 µm or less.

The thickness te of the internal electrodes 121 and 122 may indicate the size in the first direction of the internal electrodes 121 and 122. Also, the thickness te of the internal electrodes 121 and 122 may indicate the average thickness te of the internal electrodes 121 and 122 and may indicate the average size in the first direction of the internal electrodes 121 and 122.

The average size, in the first direction, of the internal electrodes 121 and 122 may be measured by scanning a cross-section of the body 110 using a scanning electron microscope (SEM) with a magnification of 10,000X. More specifically, an average value may be measured from the sizes, in the first direction, of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrodes 121 and 122 may be further generalized.

In an embodiment, the thickness td of at least one of the plurality of dielectric layers and the thickness te of at least one of the plurality of internal electrodes may satisfy 2×te < td.

In other words, the thickness td of one of the dielectric layers may be greater than twice the thickness te of one of the internal electrodes. Preferably, the average thickness td of the plurality of dielectric layers may be greater than twice the average thickness te of the plurality of internal electrodes.

Generally, a reliability issue due to a decrease in the breakdown voltage (BDV) under a high-voltage environment may be a major issue for high-voltage electronic components.

In order to prevent a decrease in breakdown voltage under a high-voltage environment, by configuring the average thickness td of the dielectric layer 111 to be greater than twice the average thickness te of the internal electrodes 121 and 122, the thickness of the dielectric layer, which is the distance between the internal electrodes, may be increased, and breakdown voltage properties may be improved.

When the average thickness td of the dielectric layer is less than twice the average thickness te of the internal electrodes, the average thickness of the dielectric layer, which is the distance between the internal electrodes, may be reduced, such that the breakdown voltage may be decrease and a short may occur between the internal electrodes.

The body 110 may include cover portions 112 and 113 disposed on both end-surfaces of the capacitance forming portion Ac in the first direction.

Specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The first cover portion 112 and the second cover portion 113 may be formed by laminating a single dielectric layer 111 or two or more dielectric layers 111 on the upper and lower surfaces of the capacitance forming portion Ac in the first direction, and may prevent damages to the internal electrodes 121 and 122 due to physical or chemical stress.

The first cover portion 112 and the second cover portion 113 may not include the internal electrodes 121 and 122 and may include the same material as that of the dielectric layer 111. That is, the upper cover portion 112 and the lower cover portion 113 may include a ceramic material, for example, a barium titanate (BaTiO₃) ceramic material.

The thickness tc of the cover portion 112 and 113 may not be limited to any particular example.

However, to easily implement miniaturization and high capacitance of multilayer electronic component, the thickness tc of the cover portions 112 and 113 may be 100 µm or less, preferably 30 µm or less. More preferably, the thickness may be 20 µm or less in an ultra-small product.

Here, the thickness tc of the cover portion may indicate the size in the first direction of the cover portions 112 and 113. Also, the thickness tc of the cover portion may indicate the average thickness tc of each of the first and second cover portions 112 and 113, or may indicate the average thickness tc of the first and second cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes, in the first direction, at 10 points at an equal distance in the second direction in the scanned image of the cover portion.

Also, the average size, in the first direction, of the cover portion measured by the above method may be substantially the same as the average size, in the first direction, of the cover portion in the cross-section in the first and third directions of the body 110.

The multilayer electronic component 100 may include side margin portions 114 and 115 arranged on both end surfaces of the third direction of the body 110.

More specifically, the side margin portions 114 and 115 may include a first side margin region 114 disposed between the internal electrodes 121 and 122 and the fifth surface 5 and a second side margin region 115 disposed between the internal electrodes 121 and 122 and the sixth surface 6.

The side margin portions 114 and 115 may indicate a region between both end-surfaces in the third direction of the first and second internal electrodes 121 and 122 and a boundary surface of the body 110 with respect to the cross-section in the first and third direction of the body 110, as illustrated.

The side margin portions 114 and 115 may be formed by forming the internal electrodes 121 and 122 by applying a conductive paste to a ceramic green sheet applied to the capacitance forming portion Ac, other than the region in which side margin portions 114 and 115 are formed, cutting the internal electrodes 121 and 122 after lamination to be exposed to the fifth and sixth surfaces 5 and 6 of the body 110 so as to suppress a step difference caused by the internal electrodes 121 and 122, and laminating a single third dielectric layer or two or more third dielectric layers in the third direction on both end-surfaces of the capacitance forming portion Ac.

The side margin portions 114 and 115 may basically prevent damages to the internal electrodes 121 and 122 due to physical or chemical stress.

The first side margin region 114 and the second side margin region 115 may not include the internal electrodes 121 and 122, and may include the same material as the first dielectric layer 111, and may correspond to, for example, a portion of the first dielectric layer 111. That is, the first side margin region 114 and the second side margin region 115 may include a ceramic material, for example, a barium titanate (BaTiO₃) ceramic material.

The width wm of the first and second side margin portions 114 and 115 may not be limited to any particular example.

However, to easily implement miniaturization and high capacitance of the multilayer electronic component 100, the width wm of the side margin portions 114 and 115 may be 100 µm or less, preferably 30 µm or less, and may be more preferably 20 µm or less in an ultra-small product.

Here, the width wm of the side margin portions 114 and 115 may refer to the size in the third direction of the side margin portions 114 and 115. Also, the width wm of the side margin portions 114 and 115 may refer to the average width wm of the side margin portions 114 and 115, and the average size in the third direction of the side margin portions 114 and 115.

The average size in the first and third direction of the side margin portion 114 and 115 may be measured by scanning a cross-section in the first and third directions of the body 110 using a scanning electron microscope (SEM) at a magnification of 10,000. More specifically, the average size may be an average value measured from the sizes in the third direction at 10 points at an equal distance in the first direction in the scanned image of one of the side margin portions.

In an embodiment, the ceramic electronic component 100 may have two external electrodes 131 and 132, but the number of the external electrodes 131 and 132 or the shape thereof may be varied depending on the forms of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Also, the external electrodes 131 and 132 may extend and may be disposed on portions of the first and second surfaces 1 and 2 of the body 110, or may extend and be disposed on a portion of the fifth and sixth surfaces 5 and 6 of the body 110. That is, the first external electrode 131 may be disposed on a portion of the first, second, fifth, and sixth surfaces 1, 2, 5, and 6 of the body 110, and the third surface 3 of the body 110, and the second external electrode 132 may be disposed on a portion of the first, second, fifth, and sixth surfaces 1, 2, 5, and 6 of the body 110, and the third surface 3 of the body 110.

The external electrodes 131 and 132 may be formed of any material having electrical conductivity, such as metal, and a specific material may be determined in consideration of electrical properties and structural stability, and the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include a first electrode layer 131a and 132a, which is a fired electrode including a first conductive metal and glass, or a second electrode layer 131b and 132b, which is a resin-based electrode including a second conductive metal and resin.

Here, the conductive metal included in the first electrode layers 131a and 132a may be referred to as the first conductive metal, and the conductive metal included in the second electrode layers 131b and 132b may be referred to as the second conductive metal. In this case, the first conductive metal and the second conductive metal may be the same or different from each other, and when a plurality of conductive metals are included, only a portion thereof may include the same conductive metal, but an embodiment thereof is not limited thereto.

Also, the electrode layers 131a, 132a, 131b, and 132b may be formed in a form in which firing electrode layers and resin-based electrode layers are formed in order on the body 110.

The electrode layers 131a, 132a, 131b, and 132b may be formed by transferring a sheet including a conductive metal onto the body, or may be formed by transferring a sheet including a conductive metal onto the firing electrode.

A material having excellent electrical conductivity may be used as the conductive metal included in the electrode layers 131a, 132a, 131b, and 132b, and for example, the conductive metal may include one or more selected from a group consisting of nickel (Ni), copper (Cu), palladium (Pd), silver (Ag), gold (Au), platinum (Pt), tin (Sn), tungsten (W), titanium (Ti), and alloys thereof, but an example embodiment thereof is not limited thereto.

In an embodiment, the electrode layers 131a, 132a, 131b, and 132b may have a two-layer structure including the first electrode layers 131a and 132a and the second electrode layers 131b and 132b, and more specifically, the external electrode 131, 132 may include the first electrode layers 131a and 132a including a first conductive metal and glass, and the second electrode layers 131b and 132b disposed on the first electrode layers 131a and 132a including a second conductive metal and resin.

The first electrode layers 131a and 132a may improve bonding with the body 110 by including glass, and the second electrode layers 131b and 132b may improve warpage strength by including resin.

The first conductive metal included in the first electrode layers 131a and 132a is not limited to any particular example as long as the material may be electrically connected to the internal electrodes 121 and 122 to form a capacitance, and for example, at least one of nickel (Ni), copper (Cu), palladium (Pd), silver (Ag), gold (Au), platinum (Pt), tin (Sn), tungsten (W), titanium (Ti) and alloys thereof may be included.

The first electrode layers 131a and 132a may be formed by applying a conductive paste prepared by adding a glass frit to first conductive metal particles and firing.

The second conductive metal included in the second electrode layers 131b and 132b may electrically connect to the first electrode layers 131a and 132a.

The second conductive metal included in the second electrode layers 131b and 132b is not limited to any particular example as long as the material may be electrically connected to the first electrode layers 131a and 132a, and at least one of nickel (Ni), copper (Cu), palladium (Pd), silver (Ag), gold (Au), platinum (Pt), tin (Sn), tungsten (W), titanium (Ti) and alloys thereof may be included.

The second conductive metal included in the second electrode layers 131b and 132b may include at least one of spherical particles and flake-shaped particles. That is, the second conductive metal may include only flake-shaped particles, only spherical particles, or a mixed form of flake-shaped particles and spherical particles. Here, the spherical particles may include shapes not completely spherical, and for example, a shape having a length ratio of the major axis to the minor axis (major axis/minor axis) of 1.45 or less. The flake-shaped particles may refer to particles having a flat and elongated shape, and are not limited to any particular example, and the flake-shaped particles may have, for example, a length ratio of the major axis to the minor axis (major axis/minor axis) of 1.95 or more. The lengths of the major and minor axes of the spherical particles and flake-shaped particles may be measured from images obtained by scanning a cross-section in the first and second directions taken from the center of the third direction of the multilayer electronic component using a scanning electron microscope (SEM).

The resin included in the second electrode layers 131b and 132b may assure bonding properties and absorbing impact, and is not limited to any particular example as long as the resin may be mixed with the second conductive metal particles to form a paste. For example, the resin may include epoxy resin.

Also, the second electrode layers 131b and 132b may include a plurality of second conductive metal particles, an intermetallic compound, and a resin. By including the intermetallic compound, electrical connectivity with the first electrode layers 131a and 132a may be further improved. The intermetallic compound may improve electrical connectivity by connecting a plurality of metal particles to each other, and may surround the plurality of metal particles and may connect the plurality of metal particles to each other.

In this case, the intermetallic compound may include a metal having a melting point lower than a curing temperature of resin. That is, since the intermetallic compound includes a metal having a melting point lower than the curing temperature of the resin, the metal having a melting point lower than the curing temperature of the resin may be melted during a drying and curing process, and may form an intermetallic compound with a portion of the metal particle and may surround the metal particle. In this case, the intermetallic compound may preferably include a metal of a low melting point of 300°C or less.

For example, Sn having a melting point of 213-220°C may be included. During the drying and curing process, Sn may melt, and the melted Sn may wet high-melting point metal particles such as Ag, Ni, or Cu by capillary action, may react with a portion of the Ag, Ni, or Cu metal particles and may form an intermetallic compound such as Ag₃Sn, Ni₃Sn₄, Cu₆Sn₅, and Cu₃Sn. Ag, Ni or Cu not participating in the reaction may remain in the form of metal particles.

Accordingly, the plurality of second conductive metal particles may include one or more of Ag, Ni and Cu, and the intermetallic compound may include one or more of Ag₃Sn, Ni₃Sn₄, Cu₆Sn₅ and Cu₃Sn.

The plating layers 131c and 132c may improve mounting properties.

The types of plating layers 131c and 132c are not limited to any particular example, and may be plating layers 131c and 132c including one or more of nickel (Ni), tin (Sn), silver (Ag), palladium (Pd) and alloys thereof, or a plurality of plating layers 131c and 132c may be formed.

For a more specific example of the plating layers 131c and 132c, the plating layers 131c and 132c may be Ni plating layers or Sn plating layers, and the Ni plating layers and the Sn plating layers may be formed in order on the electrode layer, and the Sn plating layers, Ni plating layers and Sn plating layers may be formed in order. Also, the plating layers 131c and 132c may include a plurality of Ni plating layers and/or a plurality of Sn plating layers.

The size of the multilayer electronic component 100 may not be limited to any particular example.

However, to implement both miniaturization and high capacitance, the number of lamination may need to be increased by reducing the thickness of the dielectric layer and the internal electrode, such that the effect described in the embodiments may be prominent in the multilayer electronic component 100 having a size 3216.

Hereinafter, the embodiments will be described in greater detail.

In the multilayer electronic component 100 according to some embodiments, the dielectric layer 111 may include a plurality of dielectric grains 10, 20, and 30, at least one of the plurality of dielectric grains may have a core-double shell structure 10 including a core 11, a first shell 12 surrounding at least a portion of the core 11, and a second shell 13 surrounding at least a portion of the first shell 12, wherein the first and second shells 12 and 13 may have rare earth elements, and an average atomic percentage of the rare earth elements in the first shell 12 may be higher than an average atomic percentage of the rare earth elements in the second shell 13, and the average atomic percentage of the rare earth elements in the first shell 12 may be 4.0 at% or more and 6.0 at% or less.

The dielectric layer 111 may include a plurality of dielectric grains 10, 20, and 30, and at least one of the plurality of dielectric grains may have a core-double shell structure 10 including a core 11, a first shell 12 surrounding at least a portion of the core 11, and a second shell 13 surrounding at least a portion of the first shell 12. In other words, the dielectric layer 111 may include the dielectric grain 10 of the core-double shell structure.

In some embodiments, as an example of a more specific method for measuring the content of elements included in each component of the multilayer electronic component 100, in the case of a destructive method, the component may be analyzed using the energy dispersive x-ray spectroscopy (EDS) mode of a scanning electron microscope (SEM), the EDS mode of a transmission electron microscope (TEM), or the EDS mode of a scanning transmission electron microscope (STEM). First, a thinned analysis sample may be prepared using a focused ion beam (FIB) device in a region to be measured. In the thinned sample, a damage layer on the surface may be removed using Xe or Ar ion milling, and by mapping each component to be measured from an image obtained using SEM-EDS, TEM-EDS, or STEM-EDS, qualitative/quantitative analysis may be carried out. In this case, the qualitative/quantitative analysis graph of each component may be represented by converting into the mass percentage (wt%), atomic percentage (at%), or moles percentage (mol%) of each component. In this case, the number of moles of a specific component may be represented by converting into the number of moles of another specific component.

As another method, the region to be measured may be selected by crushing the chip, and the component of the region of a portion including the dielectric microstructure selected as above may be analyzed using a device such as an inductively coupled plasma optical emission spectrometer (ICP-OES) or an inductively coupled plasma mass spectrometer (ICP-MS).

According to some embodiments, the atomic percentage(at%) of a specific element, for example, the first element, may indicate a percentage of the number of atoms of the specific first element based on the total number of atoms of the entire elements, and the atomic percentage(at%) or average atomic percentage(at%) of the first element at a specific point or a specific region may indicate a percentage or an average percentage of the number of atoms of the first element based on the total number of atoms of the entire elements included in the specific point or the specific region. More specifically, for example, the atomic percentage of a rare earth element at a specific point of the first shell may indicate a percentage of the number of atoms of the rare earth element based on the total number of atoms of the entire elements included in the specific point of the first shell, and the average atomic percentage of a rare earth element in the first shell region may indicate an average percentage of the number of atoms of the rare earth element based on the total number of atoms of the entire elements included in the first shell region.

Here, the core 11 may indicate a region in which an average atomic percentage of rare earth elements is 0 at% or more and less than 2.0 at%, the first shell 12 may indicate a region surrounding at least a portion of the core 11 in which an average atomic percentage of rare earth elements is 4.0 at% or more and 6.0 at% or less, and the second shell 13 may indicate a region surrounding at least a portion of the first shell 12 in which an average atomic percentage of rare earth elements is 2.0 at% or more than 4.0 at%.

In other words, the average atomic percentage of the rare earth elements in the first shell 12 may be higher than the average atomic percentage of the rare earth elements in the second shell 13, the average atomic percentage of the rare earth elements in the first shell 12 may be higher than the average atomic percentage of the rare earth elements in the core 11, and the average atomic percentage of the rare earth elements in the second shell 13 may be higher than the average atomic percentage of the rare earth elements in the core 11.

The first and second shells 12 and 13 may include rare earth elements, and the average atomic percentage of the rare earth elements of the first shell 12 may be higher than the average atomic percentage of the rare earth elements of the second shell 13, and the average atomic percentage of the rare earth elements of the first shell 12 may satisfy 4.0 at% or more and 6.0 at% or less, such that the multilayer electronic component 100 may satisfy at least one of the X5R, X6S, X7R, X7S, X7T, and X8R properties (hereinafter, TCC properties), may have excellent dielectric constant and may reduce dissipation factor (DF). Also, even when a high voltage environment, for example, a high voltage of 250 V or more, is applied, insulation breakdown may not occur, such that reliability may be excellent.

When the average atomic percentage of the rare earth element of the first shell 12 is less than 4.0 at%, it may not be easy to make a distinction from the second shell 13, and the TCC properties may not be satisfied. When the average atomic percentage of the rare earth element of the first shell 12 exceeds 6.0 at%, the dielectric breakdown voltage (BDV) may be lowered due to reduced dispersibility of the rare earth element.

Also, by satisfying the average atomic percentage of the rare earth element of the second shell 13 to be 2.0 at% or more than 4.0 at%, TCC properties may be satisfied, the dielectric constant may be excellent, and the dissipation factor (DF) may be reduced.

When the average atomic percentage of the rare earth element of the second shell 13 is less than 2.0 at%, the TCC properties may not be satisfied, and when the average atomic percentage of the rare earth element of the second shell 13 is 4.0 at% or more, it may not be easy to make a distinction from the first shell 12, and the dielectric breakdown voltage (BDV) may be reduced.

Also, when the average atomic percentage of the rare earth element of the core 11 is 0 at% or more and 2.0 at% or less, the dielectric constant may be excellent.

When the average atomic percentage of the rare earth element of the core 11 is 2.0 at% or more, the dielectric constant may be reduced, and the TCC properties may not be satisfied.

In the dielectric grain 10 of the core-double shell structure, the average atomic percentage of titanium (Ti) in the first shell 12 may be 15 at% or more and 25 at% or less, more preferably 18 at% or more and 22 at% or less, and the average atomic percentage of titanium (Ti) in the second shell 13 may be 15 at% or more and 25 at% or less, more preferably 18 at% or more and 22 at% or less. In this case, the average atomic percentage of titanium (Ti) in the second shell 13 may be higher than the average atomic percentage of titanium (Ti) in the first shell 12.

To describe more specifically, in some embodiments, when elements were mapped to include the rare earth elements (e.g., gadolinium (Gd)) and titanium (Ti) in the energy-dispersive X-ray spectroscopy (EDS) mode of a transmission electron microscope (TEM) for the first and second cross-sections from the center in the third direction of body 110, and EDS analysis was performed on five points of each of the first shell 12 and the second shell 13 in the dielectric grain 10 of the observed core-double shell structure, the average atomic percentage of titanium (Ti) elements at five points of the second shell 13 was 20.16 at%, and the average atomic percentage of titanium (Ti) elements at five points of the first shell 12 was 19.9 at%.

Also, in the dielectric grain 10 of the core-double shell structure, the ratio of the average atomic percentage of titanium (Ti) to the average atomic percentage of the rare earth element of the first shell 12 may be 3 or more and 5.5 or less, and the ratio of the average atomic percentage of titanium (Ti) to the average atomic percentage of the rare earth element of the second shell 13 may be 4.5 or more and 11 or less.

The ratio of the average atomic percentage of titanium (Ti) to the average atomic percentage of the rare earth element of the first shell 12 and the second shell 13 may be obtained, for example, by the method as described below, but the present disclosure is not limited thereto. First, when the average atomic percentage of the rare earth elements at 5 points in the first shell 12 is 5 at%, and the average atomic percentage of titanium (Ti) at 5 points in the first shell 12 is 20 at%, the ratio of the average atomic percentage of rare earth elements (corresponding to 5 at%) to the average atomic percentage of titanium (Ti) (corresponding to 20 at%) in the first shell 12 may be 4. Thereafter, when the average atomic percentage of the rare earth elements at 5 points in the second shell 13 is 3 at%, and the average atomic percentage of titanium (Ti) at 5 points in the second shell 13 is 20 at%, the ratio of the average atomic percentage of the titanium (Ti) (corresponding to 20 at%) to the average atomic percentage of the rare earth element (correspond to 3 at%) in the second shell 13 may be 6.67.

The structure of the core-double shell dielectric grain 10 will be described more specifically with reference to FIGS. 6A and 6B. The dielectric grain 10 of the core-double shell structure may include a core 11 on the inner side, and double shells 12 and 13 surrounding at least a portion of the core 11. In some embodiments, at least a portion of the core 11 may be surrounded by the first shell 12, and at least a portion of the first shell 12 may be surrounded by the second shell 13, but an example embodiment thereof is not limited thereto, and at least a portion of the core 11 may be surrounded by the first and second shells 12 and 13 simultaneously, and at least a portion of the first shell 12 may be surrounded by the second shell 13.

The first shell 12 may surround 80% or more of the surface of the core 11 preferably, and may surround 90% or more of the surface of the core 11 more preferably, and may surround the entire surface of the core 11 even more preferably, but an example embodiment thereof is not limited thereto.

Since the first shell 12 surrounds 80% or more of the surface of the core 11, reliability of the multilayer electronic component may be improved.

As described above, the dielectric layer 111 may include a barium titanate (BaTiO₃)-based dielectric material as a main component material, and may include first to sixth subcomponent elements as subcomponent elements.

The first subcomponent element may include a rare earth element including at least one selected from the group consisting of gadolinium (Gd), yttrium (Y), dysprosium (Dy), and terbium (Tb), the second subcomponent element may include zirconium (Zr), the third subcomponent element may include barium (Ba), the fourth subcomponent element may include magnesium (Mg), the fifth subcomponent element may include manganese (Mn), and the sixth subcomponent element may include silicon (Si).

Also, the number of moles of the subcomponent elements in some embodiments will be described based on 100 moles of titanium (Ti), but the present disclosure is not limited thereto, and the number of moles of the subcomponent elements may be based on 100 moles of a main component material (e.g., BaTiO₃ material).

Also, in some embodiments, the third subcomponent element, barium (Ba), may indicate the same element as barium (Ba) included in the main component material (e.g., BaTiO₃ material), and in order to distinguish from the content of barium (Ba) included in the main component material, barium (Ba) may be included as a third subcomponent element. Accordingly, the total element of barium (Ba) included in the dielectric layer 111 may correspond to the sum of the content of barium (Ba) as the main component material and barium (Ba) as the third subcomponent element.

More specifically, the dielectric layer 111 may include a first subcomponent element including a rare earth element, and the number of moles of the first subcomponent element based on 100 moles of titanium (Ti) included in the dielectric layer 111 may be 4 moles or more and 5 moles or less. That is, the number of moles of rare earth elements based on 100 moles of titanium (Ti) included in the dielectric layer 111 may be 4 moles or more and 5 moles or less.

As the number of moles of the rare earth elements based on 100 moles of titanium (Ti) included in the dielectric layer 111 satisfies 4 moles or more and 5 moles or less, the TCC properties may be satisfied, a dielectric constant may be improved, and the decrease in the dissipation factor (DF) or the breakdown voltage (BDV) may be prevented.

When the number of moles of the rare earth elements included in the dielectric layer 111 is less than 4 moles based on 100 moles of titanium (Ti), the TCC properties may not be satisfied, and when the number of moles of the rare earth elements included in the dielectric layer 111 is more than 5 moles based on 100 moles of titanium (Ti), the dielectric breakdown voltage (BDV) may be reduced.

The rare earth element included in the first and second shells 12 and 13 may be the same as the rare earth element included in the dielectric layer 111 described above. For example, in some embodiments, the rare earth element may include at least one selected from the group consisting of gadolinium (Gd), yttrium (Y), dysprosium (Dy), and terbium (Tb), preferably at least one of gadolinium (Gd), yttrium (Y), dysprosium (Dy), and terbium (Tb), more preferably gadolinium (Gd), but an example embodiment thereof is not limited thereto.

In the multilayer electronic component 100 according to some embodiments, the first and second shells 12 and 13 may include zirconium (Zr), and the average atomic percentage of zirconium (Zr) of the core 11 may be less than 0 at% or more than 2.0 at%, the average atomic percentage of zirconium (Zr) of the first shell 12 may be 2.0 at% or more than 4.0 at%, and the average atomic percentage of zirconium (Zr) of the second shell 13 may be less than 4.0 at% or more than 6.0 at% or less.

When the average atomic percentage of zirconium (Zr) in the second shell 13 satisfies 4.0 at% or more and 6.0 at% or less, reliability of the multilayer electronic component 100 may be improved, and when the average atomic percentage of zirconium (Zr) in the first shell 12 satisfies 2.0 at% or more and less than 4.0 at%, reliability of the multilayer electronic component 100 may be further improved.

In other words, the first and second shells 12 and 13 may include zirconium (Zr), and the average atomic percentage of zirconium (Zr) of the second shell 13 may be higher than the average atomic percentage of zirconium (Zr) of the first shell 12, the average atomic percentage of zirconium (Zr) of the second shell 13 may be higher than the average atomic percentage of zirconium (Zr) of the core 11, and the average atomic percentage of zirconium (Zr) of the first shell 12 may be higher than the average atomic percentage of zirconium (Zr) of the core 11.

As described above, since the average atomic percentage of zirconium (Zr) of the second shell 13 is higher than the average atomic percentage of zirconium (Zr) of the first shell 12, reliability of the multilayer electronic component 100 may be further improved.

The dielectric layer 111 may include a second subcomponent element including zirconium (Zr), and the number of moles of the second subcomponent element based on 100 moles of titanium (Ti) included in the dielectric layer 111 may be 6 moles or more and less than 10 moles. That is, the number of moles of zirconium (Zr) based on 100 moles of titanium (Ti) included in the dielectric layer 111 may be 6 moles or more and less than 10 moles.

The zirconium (Zr) included in the dielectric layer 111 may suppress the ferroelectricity of the main component, barium titanate (BaTiO₃).

As the number of moles of zirconium (Zr) based on 100 moles of titanium (Ti) included in the dielectric layer 111 satisfies 6 moles or more and less than 10 moles, the target TCC properties may be satisfied.

When the number of moles of zirconium (Zr) based on 100 moles of titanium (Ti) included in the dielectric layer 111 is less than 6 moles, the target TCC properties may not be satisfied or the DC-bias properties may deteriorate. When the number of moles of zirconium (Zr) to 100 moles of titanium (Ti) included in the dielectric layer 111 is 10 moles or more, the dielectric constant may deteriorate.

The dielectric layer 111 may further include a third subcomponent element including barium (Ba), and the number of moles of the third subcomponent element based on 100 moles of titanium (Ti) included in the dielectric layer 111 may be equal to or more than the number of moles of the second subcomponent element. For example, the number of moles of the third subcomponent element based on 100 moles of titanium (Ti) included in the dielectric layer 111 may be 8 moles or more and 11 moles or less. In other words, the number of moles of barium (Ba) based on 100 moles of titanium (Ti) included in the dielectric layer 111 may be 8 moles or more and 11 moles or less.

Accordingly, as the number of moles of barium (Ba) based on 100 moles of titanium (Ti) included in the dielectric layer 111 satisfies 8 moles or more and 11 moles or less, the target TCC properties may be satisfied.

When the number of moles of barium (Ba) based on 100 moles of titanium (Ti) included in the dielectric layer 111 is less than 8 moles, the target TCC properties may not be satisfied or the DC-bias properties may be deteriorated. When the number of moles of barium (Ba) to 100 moles of titanium (Ti) included in the dielectric layer 111 exceeds 11 moles, there is a concern that the dielectric constant may be deteriorated.

Here, the number of moles of barium (Ba) included in the third subcomponent element is a value excluding the number of moles of barium (Ba) by the main component material (e.g., BaTiO₃) as described above. That is, the total number of moles of barium (Ba) included in the dielectric layer 111 may indicate the sum of the number of moles of barium (Ba) by the main component material (e.g., BaTiO₃) and the number of moles of barium (Ba) included in the third subcomponent element. For example, when 8 moles or more and 11 moles or less of barium (Ba), the third subcomponent element, based on 100 moles of barium titanate (BaTiO₃) are included, the total number of moles of barium (Ba) included in the dielectric layer 111 may be 108 moles or more and 111 moles or less based on 100 moles of titanium (Ti).

The average thickness of the first shell 12 may be 20 nm or more and 70 nm or less, or the average thickness of the first shell 12 relative to the average diameter of the core 11 may be 4% or more and 18% or less.

Here, the average diameter of core 11 may indicate the average value of the diameters passing through the center of core 11, and the average thickness of first shell 12 may indicate the average value of the length of first shell 12 positioned on the extension line of the diameter passing through the center of core 11, but an example embodiment thereof is not limited thereto.

When the average thickness of first shell 12 is 20 nm or more and 70 nm or less, or when the average thickness of first shell 12 satisfies 4% or more and 18% or less compared to the average diameter of core 11, the TCC properties may be satisfied, a dielectric constant may be improved, and deterioration of dissipation factor (DF) or breakdown voltage (BDV) may be prevented.

When the average thickness of the first shell 12 is less than 20 nm, or when the average thickness of the first shell 12 is less than 4% of the average diameter of the core 11, the TCC properties may not be satisfied. When the average thickness of the first shell 12 is more than 70 nm, or when the average thickness of the first shell 12 is more than 18% of the average diameter of the core 11, the dielectric breakdown voltage (BDV) may be deteriorated.

Hereinafter, the present disclosure will be described in greater detail through embodiments, which may be to help a specific understanding of the present disclosure and the scope of the present disclosure is not limited to the embodiments.

### (Embodiment)

The dielectric layers of sample A to sample F in Table 1 included different contents (mol) of gadolinium (Gd), the first subcomponent element (rare earth element), based on 100 moles of titanium (Ti). In other words, based on 100 moles of Ti, sample A included 3.75 moles of Gd, sample B included 4.0 moles of Gd, sample C included 4.25 moles of Gd, sample D included 4.5 moles of Gd, sample E included 5.0 moles of Gd, and sample F included 5.5 moles of Gd.

The dielectric layer of sample A to sample F may include a second subcomponent element including zirconium (Zr), a third subcomponent element including barium (Ba), a fourth subcomponent element including magnesium (Mg), a fifth subcomponent element including manganese (Mn), and a sixth subcomponent element including silicon (Si) in the same content based on 100 moles of titanium (Ti). Particularly, the second subcomponent element, zirconium (Zr), may be included in 6 moles or more and less than 10 moles based on 100 moles of Ti, and the third subcomponent element, barium (Ba), may be included in 8 moles or more and 11 moles or less based on 100 moles of Ti.

As for each raw material powder including the type and content of titanium (Ti) and the first subcomponent element (Gd) described in Table 1 and the second to sixth subcomponent elements described above, zirconia beads were used as a mixing/dispersing medium, ethanol/toluene and a dispersant were mixed and milled for 12 hours, a binder was mixed, and additional milling was performed for 12 hours, thereby preparing slurry. The prepared slurry was molded into a sheet having a thickness of 8 µm using a sheet manufacturing molding machine. A nickel (Ni) internal electrode was printed on the molded sheet. The upper and lower cover portions were manufactured by laminating 25 layers of the cover molded sheet with a thickness of 10 µm to 13 µm, and the sheet on which the nickel (Ni) internal electrode is printed was pressed and laminated into 20 layers, thereby manufacturing a press bar. The press bar was cut into chips of size 2012 (length × width: 2.0 mm × 1.2 mm) using a cutter. The MLCC chip of size 2012 was calcinated at a temperature of 1200°C to 1300°C in a reducing atmosphere (1.2%H2-98.8%N2) for about 1 hour and 40 minutes, and reoxidation was performed at 1070°C in an N2 atmosphere for 3 hours. A termination process was performed on the fired chip with copper (Cu) paste and electrode firing was performed, thereby completing the external electrode, and manufacturing the MLCC sample.

After the firing, the thickness of the dielectric layer was about 7.3 µm, and the number of dielectric layers interposed between the internal electrodes was 20.

**[Table 1]**

| Sample | Titanium (Ti) (mol) | Gadolinium (Gd) (mol) |
|---|---|---|
| A | 100 | 3.75 |
| B | 100 | 4.0 |
| C | 100 | 4.25 |
| D | 100 | 4.5 |
| E | 100 | 5.0 |
| F | 100 | 5.5 |

Table 2 presents the evaluation of the properties of sample groups A to F after performing firing at temperatures of 1100°C-1300°C for the raw materials including the components of samples A to F in Table 1. In this case, the different sample numbers in the same sample group may indicate that, for example, sample A-1 to sample A-5 were fired at different temperatures, which may also be applied to sample group B and sample group F.

The dielectric constant and the dissipation factor were measured at 1kHz and AC 1V using an LCR meter for the capacitance of the proto-type MLCC sample manufactured by the above-mentioned method. Thereafter, the dielectric constant of the dielectric was calculated from the capacitance, the thickness of the dielectric layer, the area of the internal electrode, and the number of laminations. The dielectric constant was evaluated as good when the dielectric constant was 900 or higher, and as defective when less than 900.

As for the TCC properties, the change in capacitance according to temperature was measured over a temperature range from -55°C to 125°C based on the capacitance value at 25°C, and was represented as a percentage (%) value. In this case, samples satisfying X7T properties (properties satisfying a capacitance change rate of -33% or more and 22% or less at -55°C or higher and 125°C or lower based on the capacitance at 25°C) were evaluated as good, and samples not satisfying X7T properties were evaluated as defective.

As for Step-IR, the voltage was applied gradually at a temperature of 150°C to the sample, and specifically, DC 15 V/µm was applied for 10 minutes, and an additional electric field of DC 15 V/µm was applied gradually at 10-minute intervals, and by continuously increasing the insulation resistance (IR) at 10-minute intervals, the step at which the insulation resistance (IR) drops below 10⁵Ω was measured, and the corresponding step was listed. For example, as for sample A-1, when 15 V/µm was applied for 10 minutes (1-step), and the voltage was increased twice by 15 V/um, insulation resistance decreased below 10⁵Ω, and listed as 3-step. In this case, the sample in which a voltage step was 6 or more was evaluated as good, and the sample in which a voltage step was 5 or less was evaluated as defective

As for the properties evaluation, when the sample was evaluated as good in the entirety of the dielectric constant, X7T properties, and Step-IR evaluation, the sample was marked "O." When any of the dielectric constant, X7T properties, and Step-IR evaluation was evaluated as defective, the sample was marked "X."

**[Table 2]**

| Sample | Dielectri c constant | DF (%) | TCC (%) | Step-IR 10 V/µm) | Evalua tion |
|---|---|---|---|---|---|
| A-1 | 980 | 1. 59% | -2.5/-3.2 | 3-step | X |
| A-2 | 1020 | 0.62% | -12.5/-13.5 | 4-step | X |
| A-3 | 1100 | 0.78% | -12.7/-16.7 | 4-step | X |
| A-4 | 1152 | 0.75% | -15.4/-35.4 | 5-step | X |
| A-5 | 1350 | 1.23% | -38.4/-42.5 | 6-step | X |
| B-1 | 1004 | 0.54% | -13.2/-23.8 | 6-step | ○ |
| B-2 | 1121 | 0.72% | -14.5/-24.7 | 6-step | ○ |
| B-3 | 1157 | 0.79% | -18.0/-28.9 | 7-step | ○ |
| C-1 | 1156 | 0.68% | -13.9/-23.6 | 6-step | ○ |
| D-1 | 1162 | 0.73% | -14.5/-24.5 | 6-step | ○ |
| E-1 | 1132 | 0.62% | -15.7/-23.6 | 6-step | ○ |
| F-1 | 782 | 2.67% | -2.3/-2.5 | 2-step | X |
| F-2 | 865 | 1.54% | -3.5/-3.9 | 2-step | X |
| F-3 | 936 | 0.86% | -5.2/-7.3 | 3-step | X |
| F-4 | 1025 | 0.57% | -10.2/-12.6 | 4-step | X |
| F-5 | 1103 | 0.72% | -12.3/-18.3 | 5-step | X |

In samples B-1, B-2, B-3, C-1, D-1, and E-1, the average atomic percentage of gadolinium (Gd) in the first shell was measured to be 4.0 at% or more and 6.0 at% or less, which was higher than the average atomic percentage of gadolinium (Gd) in the second shell. Accordingly, depending on the content of gadolinium (Gd) included in the raw material powder, the core-double shell dielectric grain in which the average atomic percentage of gadolinium (Gd) in the first shell was 4.0 at% or more and 6.0 at% or less, which was higher than the average atomic percentage of gadolinium (Gd) in the second shell, may or may not be implemented.

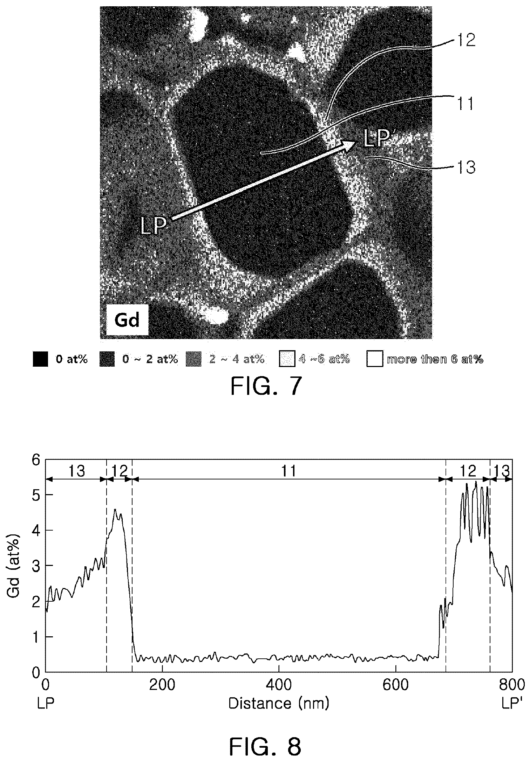

FIG. 7 is an image of mapping gadolinium (Gd) element through EDS mode of scanning transmission electron microscope (STEM) for core-double shell dielectric grain according to an embodiment. FIG. 8 is an atomic percentage graph of gadolinium (Gd) measured by performing a line profile taken along LP-LP' in FIG. 7

More specifically, it may be confirmed through STEM-EDS analysis that a single dielectric grain had a core region mainly including BaTiO₃ and a shell region including subcomponent elements. In this case, in the result of mapping the image based on gadolinium (Gd), the region in which the average atomic percentage of gadolinium (Gd) was 4 at% or more and 6 at% or less corresponded to the first shell, the region in which the average atomic percentage of gadolinium (Gd) was 2 at% or more and less than 4 at% corresponded to the second shell, and the region in which the average atomic percentage of gadolinium (Gd) was 0 at% or more and less than 2 at% corresponded to the core.

As a result of interpreting the line profile, it was determined that the region in which the average atomic percentage of gadolinium (Gd) was 4 at% or more and 6 at% or less corresponded to the first shell, the region in which the average atomic percentage of gadolinium (Gd) was 2 at% or more and less than 4 at% corresponded to the second shell, and the region in which the average atomic percentage of gadolinium (Gd) was 0 at% or more and less than 2 at% corresponded to the core.

Although not illustrated in the drawing, in sample A-4, the region in which the average atomic percentage of gadolinium (Gd) was less than 2 at% or more than 4 at% was widely distributed in the shell region, such that it was difficult to distinguish between the first shell and the second shell, whereas in samples B-3 and D-1, which had similar firing temperatures to sample A-4 but had higher gadolinium (Gd) content than in sample A-4, a region in which the average atomic percentage of gadolinium (Gd) was 4 at% or more and 6 at% or less on an interfacial surface between the core and the shell among the BaTiO₃ grains of the core-shell structure was detected, and the first shell was formed.

Also, in sample groups B to E, when the average atomic percentage of gadolinium (Gd) of the first shell was measured as 4.0 at% or more and 6.0 at% or less, which was higher than the average atomic percentage of gadolinium (Gd) of the second shell, the DF (%) value was relatively low, such that the dielectric loss was addressed.

According to the aforementioned embodiments, the multilayer electronic component may satisfy the TCC properties.

Also, reliability of the multilayer electronic component under high voltage may be excellent.

Also, reliability of the multilayer electronic component may improve.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the embodiments. Unless explicitly described to the contrary, a singular form may include a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and internal electrodes; and
external electrodes disposed on an outer surface of the body,
wherein the dielectric layer includes a plurality of dielectric grains,
wherein at least one of the plurality of dielectric grains has a core-double shell structure including a core, a first shell surrounding at least a portion of the core, and a second shell surrounding at least a portion of the first shell,
wherein the first and second shells include rare earth elements, and an average atomic percentage of the rare earth elements in the first shell is higher than an average atomic percentage of the rare earth elements in the second shell, and
wherein the average atomic percentage of the rare earth elements in the first shell is 4.0 at% or more and 6.0 at% or less.

2. The multilayer electronic component of claim 1, wherein the average atomic percentage of the rare earth elements in the second shell is 2.0 at% or more and less than 4.0 at%.

3. The multilayer electronic component of claim 1, wherein an average atomic percentage of the rare earth elements in the core is 0 at% or more and less than 2.0 at%.

4. The multilayer electronic component of claim 1,
wherein the dielectric layer includes the rare earth elements and titanium (Ti), and
wherein a number of moles of the rare earth elements based on 100 moles of titanium (Ti) included in the dielectric layer is 4 moles or more and 5 moles or less.

5. The multilayer electronic component of claim 1, wherein the rare earth elements include at least one of selected from the group consisting of gadolinium (Gd), yttrium (Y), dysprosium (Dy), and terbium (Tb).

6. The multilayer electronic component of claim 1, wherein the first and second shells include zirconium (Zr), and an average atomic percentage of zirconium (Zr) in the second shell is higher than an average atomic percentage of zirconium (Zr) in the first shell.

7. The multilayer electronic component of claim 1, wherein the first and second shells include zirconium (Zr), and an average atomic percentage of zirconium (Zr) in the second shell is 4.0 at% or more and 6.0 at% or less.

8. The multilayer electronic component of claim 1, wherein the first and second shells include zirconium (Zr), and an average atomic percentage of zirconium (Zr) in the first shell is 2.0 at% or more and less than 4.0 at%.

9. The multilayer electronic component of claim 1,
wherein the dielectric layer includes zirconium (Zr) and titanium (Ti), and
wherein a number of moles of zirconium (Zr) based on 100 moles of titanium (Ti) included in the dielectric layer is 6 moles or more and less than 10 moles.

10. The multilayer electronic component of claim 1, wherein an average thickness of the first shell is 20 nm or more and 70 nm or less.

11. The multilayer electronic component of claim 1, wherein an average thickness of the first shell relative to an average diameter of the core is 4% or more and 18% or less.

12. The multilayer electronic component of claim 1, wherein the first shell surrounds 80% or more of a surface of the core.

13. The multilayer electronic component of claim 1, wherein the dielectric layer includes a plurality of dielectric layers, and at least one of the plurality of dielectric layers has an average thickness of 10.0 um or less.

14. The multilayer electronic component of claim 1, wherein the multilayer electronic component satisfies a capacitance change rate of -33% or more and 22% or less at -55°C or higher and 125°C or lower based on capacitance at 25°C.
